# DEMANDE DE BREVET EUROPEEN

(11) **EP 3 832 406 A1**
(43) Date de publication de la demande: **09.06.2021**
(21) Numéro de dépôt: 19214187.7
(22) Date de dépôt: 06.12.2019
(51) Int. Cl.: G04G 21/02, G04G 9/00

(54) **PROCÉDÉ DE GESTION DE L'UTILISATION DE DONNÉES DANS UNE MONTRE**

(71) Demandeur: Tissot S.A., 2400 Le Locle (CH)
(72) Inventeur: FRANZI, Edoardo, 1400 Cheseaux-Noréaz (CH)
(74) Mandataire: ICB SA

(57) **Abrégé**

L'invention concerne un procédé de contrôle d'accès à au moins une donnée confidentielle (26) archivée dans un élément de mémoire d'une montre, ledit élément de mémoire comprenant deux catégories de données, des données générales (27) et lesdites données confidentielles (26), le procédé comportant les étapes suivantes :
- authentification (10) du porteur de la montre (100) en vue d'autoriser un accès aux fonctions de cette montre (100) ;
- sélection (11) d'une desdites fonctions de la montre requérant l'utilisation d'au moins une desdites données confidentielles (26) ou générales (27) archivées dans l'élément de mémoire ;
- détermination (12) de la catégorie à laquelle appartient ladite au moins une donnée requise par la fonction ;
- vérification (15) de l'identité du porteur de la montre (100) à partir d'une interaction entre le porteur de cette montre (100) et une représentation graphique comprise dans ladite montre (100), et
- autorisation (25) d'utilisation de ladite au moins une donnée confidentielle par la fonction dès lors que l'identité du porteur de la montre est vérifiée.

## Description

### Domaine technique

La présente invention concerne un procédé de vérification de l'utilisation de données archivées dans une montre qui permet en particulier de contrôler l'accès à au moins une donnée confidentielle archivée dans un élément de mémoire de cette montre.

L'invention concerne aussi un système mettant en oeuvre un tel procédé ainsi qu'une montre comprenant ce système et un programme d'ordinateur.

### Art antérieur

Une montre comprend un ensemble de fonctions qui peut être utilisé par le porteur. De telles fonctions peuvent permettre de consulter des données personnelles de ce porteur ou encore d'accéder à des prestations de service telles que des prestations bancaires, des prestations commerciales (boutiques en ligne, entreprises de commerce électronique) ou encore des prestations de messagerie électronique ou de messagerie instantanée. Dans un tel contexte, un inconvénient réside ici dans le fait qu'une fois que le porteur de la montre est authentifié il est possible à n'importe quel individu d'avoir accès aux fonctions de la montre notamment dans le cas où cette dernière a été volée et de pouvoir ainsi accéder aux données personnelles et confidentielles du porteur.

On comprend qu'il existe un besoin de trouver une solution, notamment qui ne présente pas les inconvénients de l'art antérieur.

### Résumé de l'invention

Un but de la présente invention est par conséquent de proposer une solution sécurisée, fiable, sure et robuste permettant de contrôler l'accès aux données confidentielles archivées dans un élément de mémoire d'une montre.

L'invention concerne un procédé de contrôle d'accès à au moins une donnée confidentielle archivée dans un élément de mémoire d'une montre, ledit élément de mémoire comprenant deux catégories de données, des données générales et lesdites données confidentielles, le procédé comportant les étapes suivantes :
- authentification du porteur de la montre en vue d'autoriser un accès aux fonctions de cette montre ;
- sélection d'une desdites fonctions de la montre requérant l'utilisation d'au moins une desdites données confidentielles ou générales archivées dans l'élément de mémoire ;
- détermination de la catégorie à laquelle appartient ladite au moins une donnée requise par la fonction ;
- vérification de l'identité du porteur de la montre à partir d'une interaction entre le porteur de cette montre et une représentation graphique comprise dans ladite montre, et
- autorisation d'utilisation de ladite au moins une donnée confidentielle par la fonction dès lors que l'identité du porteur de la montre est vérifiée.
Dans d'autres modes de réalisation :
- l'étape de de détermination comprend une sous-étape d'estimation d'un critère d'accès à ladite donnée qui définit l'appartenance de ladite donnée à la catégorie des données confidentielles ou à la catégorie des données générales ;
- l'étape de de détermination comprend une sous-étape de comparaison entre le critère d'accès estimé et un critère de référence ;
- l'étape de vérification comprend une sous-étape de présentation d'une représentation graphique sur/dans l'interface de diffusion d'une information visuelle de ladite montre ;
- l'étape de vérification comprend une sous-étape de génération d'un élément d'identification numérique à partir dudit au moins un élément d'information biométrique compris dans les images acquises de la portion de peau ;
- l'étape de vérification comprend une sous-étape de validation d'un élément d'identification numérique généré en prévision de l'identification du porteur ;
- l'élément d'information biométrique est relatif à un réseau vasculaire ou à une texture de cette peau.

L'invention concerne aussi un système de contrôle d'accès à au moins une donnée confidentielle archivée dans un élément de mémoire d'une montre, mettant en œuvre ce procédé, le système comprenant les éléments suivants reliés entre eux : une unité de traitement, un capteur biométrique multispectral de peau, une interface de saisie, une interface de diffusion d'une information visuelle et l'élément de mémoire comprenant deux catégories de données, des données générales et lesdites données confidentielles.

L'invention concerne également une montre, notamment une montre mécanique connectée, comportant un tel système.

L'invention concerne aussi un programme d'ordinateur comprenant des instructions de code de programme pour l'exécution des étapes de ce procédé lorsque ledit programme est exécuté par une unité de traitement.

### Brève description des figures

D'autres particularités et avantages ressortiront clairement de la description qui en est faite ci-après, à titre indicatif et nullement limitatif, en référence aux figures annexées, dans lesquelles :
- la figure 1 est une représentation schématique d'une montre comprenant un système de contrôle d'accès à au moins une donnée confidentielle archivée dans un élément de mémoire de cette montre, selon un mode de réalisation de l'invention, et
- la figure 2 est un logigramme relatif à un procédé de contrôle d'accès à au moins une donnée confidentielle archivée dans l'élément de mémoire de la montre, selon le mode de réalisation de l'invention.

### Description détaillée de l'invention

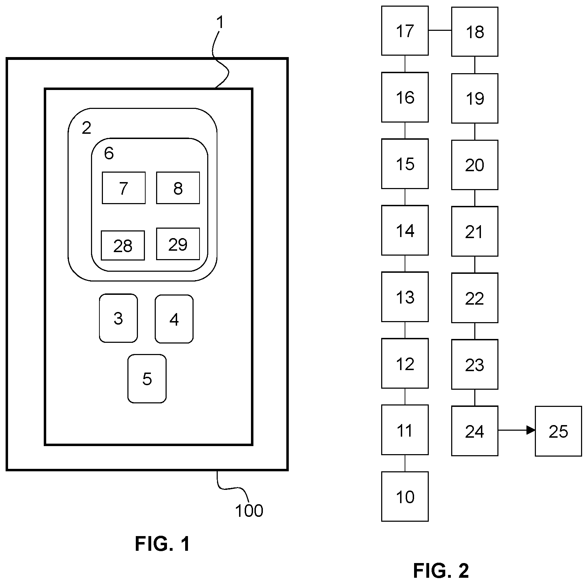

Sur la figure 1 est représentée une montre comprenant un système 1 de contrôle d'accès à au moins une donnée confidentielle archivée dans un élément de mémoire de cette montre. Une telle montre 100 est de préférence une montre 100 mécanique connectée comprenant un corps tel qu'une boîte de montre, et un élément d'attache tel qu'un bracelet permettant de fixer ce corps par exemple au poignet du porteur. Cette montre 100 comprend plus précisément de manière non limitative et/ou non exhaustive :
- une unité de traitement 2 comportant des ressources matérielles et logicielles en particulier au moins un processeur coopérant avec un élément de mémoire 3, ledit élément de mémoire 3 comprenant notamment deux catégories de données, des données générales 27 et des données confidentielles 26 ;
- une interface de diffusion d'une information visuelle 4 telle qu'un cadran d'affichage hybride pourvu d'une première composante d'affichage analogique et d'une deuxième composante d'affichage numérique et/ou alphanumérique ;
- une interface de saisie 5 tel qu'un clavier ou encore une interface tactile comprise par exemple dans l'interface de diffusion d'une information visuelle 4, et
- un capteur biométrique multispectral de peau 7 comprenant au moins un capteur photographique 8a, au moins une source d'éclairage multispectral 8b et au moins un capteur d'image thermique 8c, la source d'éclairage 8b pouvant émettre un rayonnement lumineux dans des longueurs d'ondes comprises entre 300 et 1100 nm, de plus cette source d'éclairage 8b peut être du type laser.

Dans le présent mode de réalisation de l'invention, les données confidentielles 26 sont des données personnelles/secrètes/privées du porteur de la montre 100 et dont l'accès par une fonction donnée de cette montre 100 requiert une identification du porteur. Les données générales sont quant à eux des données dites « publiques » pouvant être relatives au porteur et au regard desquelles une fonction donnée peut accéder librement. A titre d'exemple, les données confidentielles 26 peuvent comprendre des fichiers numériques relatifs à des images, des vidéos, des documents (par exemple aux format texte, tableur, XML, etc...) comportant des informations confidentielles comme des informations personnelles du porteur (bancaires, nom, adresse, date de naissance, poids, âge, sexe, rythme cardiaque, cycle de sommeil, etc...). Ces données confidentielles 26 peuvent aussi comprendre des clés de chiffrement/déchiffrement, des certificats, des codes d'authentification, des mots de passe et des codes personnels.

Dans cette montre 100, l'unité de traitement 2 est reliée entre autres à l'interface de diffusion d'une information visuelle 4, à l'interface de saisie 5 ainsi qu'au capteur biométrique multispectral 7. On notera en complément que le capteur biométrique multispectral 7 est agencé dans le corps du dispositif électronique 100 et/ou dans l'élément d'attache.

Dans cette montre, l'élément de mémoire 3 de l'unité de traitement 2 de la montre 100 comprend des données confidentielles 26 et des données générales 27 ainsi que des paramètres de classification de ces données dans l'une ou l'autre de ces deux catégories confidentielle ou générale. Ces éléments de mémoire 3 comportent également Ces éléments de mémoire 6 de l'unité de traitement 2 comprennent aussi au moins une représentation graphique 7 permettant d'identifier le porteur comme on le verra par la suite. Cette représentation graphique 7 peut par exemple être une image comprenant au moins un objet. A titre d'exemple, cette image définit une scène comprenant une pluralité d'objets tels que des habitations, des véhicules et/ou un astre comme la lune, etc... On comprend bien évidemment que cette image peut définir d'autres types de scène comportant au moins un objet. Ces éléments de mémoire 6 comportent également des données relatives à une séquence de référence 8 comprenant des portions d'identification de référence de cette représentation graphique 7, lesdites portions ayant été préalablement sélectionnées par le porteur de la montre 100 lors d'un processus de configuration relative à l'identification du porteur.

Ainsi que l'illustre la figure 2, le système 1 est apte à mettre en œuvre un procédé de contrôle d'accès à au moins une donnée confidentielle archivée dans un élément de mémoire d'une montre, ledit élément de mémoire comprenant deux catégories de données, des données générales 27 et lesdites données confidentielles 26.

Ce procédé comprend une étape d'authentification 10 du porteur de la montre 100 autorisant un accès à l'utilisation de fonctions de cette montre 100. Cette étape d'authentification 10 permet donc d'identifier de manière certaine le porteur de la montre afin qu'il puisse avoir accès à l'utilisation de toutes les fonctions de cette montre 100. Autrement dit, elle permet au porteur d'apporter la preuve de son identité en prévoyant la saisie d'un code d'authentification ou d'un code secret par le biais d'une interaction entre le porteur et l'interface de saisie 34.

En complément, on comprend que les fonctions peuvent être mises en œuvre par des algorithmes de traitement exécutés par l'unité de traitement 2 de la montre 100 dès lors que ces fonctions sont activées/sélectionnées suite à une interaction entre le porteur et l'interface de saisie 5 de cette montre 100. Ces algorithmes ainsi exécutés requiert une utilisation des données générales 27 et/ou des données confidentielles 26. Dans des exemples ici énoncés de manière non limitative et non exhaustive, ces fonctions de la montre peuvent concerner une fonction d'édition d'image ou de vidéo, une fonction de traitement de texte, une fonction de connexion à service de prestation bancaire, fonction de connexion à un service de prestation commerciale (boutiques en ligne, entreprises de commerce électronique), fonction de connexion à un service de messagerie électronique ou de messagerie instantanée.

A la suite de cette étape d'authentification 10, le procédé comprend une étape de sélection 11 d'une desdites fonctions de la montre requérant l'utilisation d'au moins une desdites données confidentielles 26 ou générales 27 archivées dans l'élément de mémoire. Lors de cette étape 11, cette fonction est sélectionnée parmi toutes les fonctions de la montre qui sont affichées sur l'interface de diffusion visuelle 4 et ce, suite à une interaction entre le porteur et l'interface de saisie 5 de cette montre 100. Ainsi que nous l'avons évoqué précédemment, une telle interaction participe alors à l'exécution par l'unité de traitement 2 d'un algorithme de traitement visant en la réalisation de cette fonction à partir notamment d'au moins une donnée archivée dans l'élément de mémoire 3 qui ici est nécessaire à la mise en œuvre de cette algorithme.

Le procédé comprend ensuite une étape de détermination 12 de la catégorie à laquelle appartient ladite au moins une donnée requise par la fonction. Cette étape 12 comprend une sous-étape d'estimation 13 d'un critère d'accès à ladite donnée qui définit l'appartenance de ladite donnée à la catégorie des données confidentielles 26 ou à la catégorie des données générales 27. Cette sous-étape 13 comprend une phase de mise en œuvre d'opérations de calcul par l'unité de traitement 2 pour l'obtention de ce critère d'accès et ce, à partir de ladite donnée, de la nature ou type de la fonction et d'un paramètre de classification de cette donnée. Un tel paramètre est archivé dans l'élément de mémoire de l'unité de traitement de la montre en étant associé à la donnée correspondante. Ce paramètre définit l'appartenance de ladite donnée à l'une ou l'autre des catégories des données confidentielles 26 ou générales 27 et ce, en fonction de la nature ou du type des différentes fonctions de la montre, susceptibles de requérir une telle donnée dans le cadre de leur mise en œuvre.

Ainsi, ce paramètre peut permettre de définir qu'une donnée telle qu'une image est une donnée confidentielle pour une fonction donnée et une donnée générale pour une autre fonction de la montre. On comprend donc que dans ce contexte, l'appartenance de la donnée à l'une ou l'autre de ces deux catégories est relative à la fonction qui en requiert l'utilisation.

L'étape de détermination 12 comporte ensuite une sous-étape de comparaison 14 entre ce critère d'accès estimé et un critère de référence. Dans ce contexte, ladite au moins une donnée requise par la fonction appartient à la catégorie des données confidentielles 26 si le critère d'accès est supérieur ou égal au critère de référence. A l'inverse, si le critère d'accès est inférieur au critère de référence alors ladite au moins une donnée est comprise dans la catégorie des données générales.

Par la suite, le procédé comprend une étape de vérification 15 de l'identité du porteur de la montre 100 à partir d'une interaction entre le porteur de cette montre 100 et une représentation graphique comprise dans ladite montre 100 plus particulièrement une représentation graphique affichée sur/dans l'interface de diffusion d'une information visuelle 4 de ladite montre 100. Un telle étape 15 est effectuée systématiquement à la suite de la sélection d'une fonction afin notamment de permettre à l'unité de traitement 2 de contrôler que le porteur de la montre 100 est toujours en possession de cette dernière et qu'il est bien à l'origine de la sélection de la fonction. Cette étape 15 comprend une sous-étape de présentation 16 d'une représentation graphique 7 sur/dans l'interface de diffusion d'une information visuelle 4 de ladite montre 100. Cette sous-étape 16 comporte une phase de génération 17 de l'affichage, sur/dans l'interface de diffusion d'une information visuelle 4, de la représentation graphique 7 prévue pour la mise en œuvre de cette identification. Cette phase 17 peut comprendre une sous-phase de sélection par le porteur parmi un échantillon d'au moins deux représentations graphiques 7 affichées sur l'interface de diffusion d'une information visuelle 4, de la représentation graphique 7 prévue pour la mise en œuvre de cette identification. On notera que le porteur est le seul à connaitre la représentation graphique 7 qu'il a choisi lors d'un processus de configuration relative à cette identification.

Cette sous-étape de présentation 16 comprend ensuite une phase de déclenchement 18 d'un compte à rebours dès lors que la phase de génération 17 est réalisée. Autrement dit, le compte à rebours préconfigurable, est déclenché une fois la représentation graphique 7 est présentée sur l'interface de diffusion 4. Une telle phase 17 participe à partir d'un intervalle de temps limité défini par ce compte à rebours, à décompter le temps estimé nécessaire à la saisie de la séquence de portions d'identification de la représentation graphique 7 affichée sur/dans sur l'interface de diffusion 4.

Par la suite, l'étape de vérification 15 comprend une sous-étape de sélection 19 dans l'intervalle de temps limité d'une séquence d'au moins deux portions d'identification de ladite représentation graphique 7 visant à identifier ledit porteur, ladite séquence correspondant à un code d'identification du porteur. De telles portions d'identification ne sont pas directement visibles dans la représentation graphique 7 présentée sur/dans l'interface de diffusion 4. Dans ces conditions, la sous-étape de sélection 19 comprend une phase de visualisation 20 d'au moins une desdites portions d'identification de la séquence dans ladite représentation graphique 7. Cette phase de visualisation 17 comprend une sous-phase de sélection d'au moins une zone d'intérêt de la représentation graphique 7 susceptible de comprendre ladite au moins une portion d'identification. Lors de cette sous-phase, le porteur sélectionne par exemple une première zone d'intérêt ou une deuxième zone d'intérêt en effectuant un agrandissement de cette première zone ou cette deuxième zone à partir de l'interface de saisie 5. Une fois cette première ou deuxième zone d'intérêt sélectionnée les portions d'identification deviennent alors visibles. Dans cette configuration, chaque portion d'identification utile pour la réalisation/constitution de la séquence peut être sélectionnée à partir de l'interface de saisie 5.

Il convient de remarquer que la séquence comprend un nombre ordonné de portions d'identification et que la zone d'intérêt sélectionnée peut comprendre par exemple trois portions d'identification dont seulement deux sont ordonnées successivement l'une après l'autre dans la séquence. Dans ce contexte, la portion d'identification restante requiert pour faire partie de la séquence, la sélection d'une portion d'identification comprise dans une autre zone d'intérêt de la représentation graphique 7.

Ensuite, l'étape de vérification 15 comprend une sous-étape de validation 21 de la séquence sélectionnée. Cette sous-étape de validation 21 comprend une phase de contrôle 22 que la sélection de la séquence de portions d'identification a été réalisée dans l'intervalle de temps limité défini par le compte à rebours. Dans la mesure où cette sélection n'a pas été réalisée dans l'intervalle de temps limité, la sous-étape de validation 21 comprend une phase de renouvellement 23 des sous-étapes de présentation 16 et de sélection 19. Si par la suite, la sélection de la séquence n'a de nouveau pas été réalisée dans l'intervalle de temps limité, l'établissement l'accès à la montre 100 est supprimé et en particulier l'accès aux fonctions de cette montre 100. Dans ce contexte, le porteur de la montre est invité à s'authentifier de nouveau afin d'apporter la preuve de son identité par la saisie d'un code d'authentification ou d'un code secret et ce, par le biais d'une interaction entre le porteur et l'interface de saisie 5.

Dans la mesure où cette sélection a été réalisée dans cet intervalle de temps limité, la sous-étape de validation 21 comprend alors une phase de comparaison 23, mise en œuvre par l'unité de traitement 2, entre ladite séquence sélectionnée et la séquence de référence 8. Cette phase de comparaison 23 comprend une sous-phase de rejet de l'identification du porteur si ladite séquence est sensiblement différente ou différente de la séquence de référence 8. Dans ce cas de figure, l'exécution par l'unité de traitement 2 de l'algorithme de traitement visant en la réalisation de cette fonction est arrêté par l'unité de traitement 2. De plus, l'accès à la montre 100 est aussi supprimé et en particulier l'accès aux fonctions de cette montre. Dans ce contexte, le porteur de la montre est invité à s'authentifier de nouveau, lors d'une nouvelle exécution de l'étape d'authentification 10, afin d'apporter la preuve de son identité par la saisie d'un code d'authentification ou d'un code secret et ce, par le biais d'une interaction entre le porteur et l'interface de saisie 34. En effet, le porteur et propriétaire de la montre 100 peut ne plus être en sa possession.

A l'inverse, la phase de comparaison 23 comprend aussi une sous-phase d'identification du porteur avec succès si ladite séquence est sensiblement similaire ou similaire à la séquence de référence 8. Dans ce cas, le procédé prévoit alors la mise en œuvre d'une étape d'autorisation 24 d'utilisation de ladite au moins une donnée appartenant à la catégorie des données confidentielles 26 dès lors que l'identité du porteur de la montre est vérifiée. Lors de cette étape 24, l'unité de traitement 2 poursuit l'exécution par l'algorithme de traitement visant en la réalisation de cette fonction à partir de la donnée archivée dans l'élément de mémoire 6.

L'invention porte aussi sur un programme d'ordinateur comprenant des instructions de code de programme pour l'exécution des étapes 10 à 24 de ce procédé lorsque ledit programme est exécuté par l'unité de traitement 2 de la montre 100.

## Revendications

1. Procédé de contrôle d'accès à au moins une donnée confidentielle (26) archivée dans un élément de mémoire d'une montre, ledit élément de mémoire comprenant deux catégories de données, des données générales (27) et lesdites données confidentielles (26), le procédé comportant les étapes suivantes :
- authentification (10) du porteur de la montre (100) en vue d'autoriser un accès aux fonctions de cette montre (100) ;
- sélection (11) d'une desdites fonctions de la montre requérant l'utilisation d'au moins une desdites données confidentielles (26) ou générales (27) archivées dans l'élément de mémoire ;
- détermination (12) de la catégorie à laquelle appartient ladite au moins une donnée requise par la fonction ;
- vérification (15) de l'identité du porteur de la montre (100) à partir d'une interaction entre le porteur de cette montre (100) et une représentation graphique comprise dans ladite montre (100), et
- autorisation (25) d'utilisation de ladite au moins une donnée confidentielle par la fonction dès lors que l'identité du porteur de la montre est vérifiée.

2. Procédé selon la revendication précédente, **caractérisé en ce que** l'étape de de détermination (12) comprend une sous-étape d'estimation (13) d'un critère d'accès à ladite donnée qui définit l'appartenance de ladite donnée à la catégorie des données confidentielles (26) ou à la catégorie des données générales (27).

3. Procédé selon la revendication précédente, **caractérisé en ce que** l'étape de de détermination (12) comprend une sous-étape de comparaison (14) entre le critère d'accès estimé et un critère de référence.

4. Procédé selon l'une quelconque des revendications précédentes, **caractérisé en ce que** l'étape de vérification (15) comprend une sous-étape de présentation (16) d'une représentation graphique (7) sur/dans l'interface de diffusion d'une information visuelle (4) de ladite montre (100).

5. Procédé selon l'une quelconque des revendications précédentes, **caractérisé en ce que** l'étape de vérification (15) comprend une sous-étape de génération (17) d'un élément d'identification numérique à partir dudit au moins un élément d'information biométrique compris dans les images acquises de la portion de peau.

6. Procédé selon l'une quelconque des revendications précédentes, **caractérisé en ce que** l'étape de vérification (15) comprend une sous-étape de validation (23) d'un élément d'identification numérique généré en prévision de l'identification du porteur.

7. Procédé selon l'une quelconque des revendications précédentes, **caractérisé en ce que** l'élément d'information biométrique est relatif à un réseau vasculaire ou à une texture de cette peau.

8. Système (1) de contrôle d'accès à au moins une donnée confidentielle archivée dans un élément de mémoire d'une montre (100), mettant en œuvre le procédé selon l'une quelconque des revendications précédentes, le système comprenant les éléments suivants reliés entre eux : une unité de traitement (2), un capteur biométrique multispectral de peau (7), une interface de saisie (34), une interface de diffusion d'une information visuelle (4) et l'élément de mémoire (6) comprenant deux catégories de données, des données générales (27) et lesdites données confidentielles (26).

9. Montre (100), notamment une montre (100) mécanique connectée, comportant un système (1) selon la revendication précédente.

10. Programme d'ordinateur comprenant des instructions de code de programme pour l'exécution des étapes (10 à 27) du procédé selon l'une quelconque des revendications 1 à 7 lorsque ledit programme est exécuté par une unité de traitement (2).
